Europäisches Patentamt

(19) European Patent Office

Office européen des brevets

(11) Veröffentlichungsnummer: **0 030 568**
B1

(12) # EUROPÄISCHE PATENTSCHRIFT

(45) Veröffentlichungstag der Patentschrift:
23.11.83

(51) Int. Cl.³: **A 01 D 35/28**, A 01 D 55/00

(21) Anmeldenummer: 79105021.4

(22) Anmeldetag: **10.12.79**

(54) **Schneidwerk zum Beschneiden von Hecken und Büschen oder dergleichen.**

(30) Priorität: **24.11.79 DE 2947511**

(43) Veröffentlichungstag der Anmeldung:
**24.06.81 Patentblatt 81/25**

(45) Bekanntmachung des Hinweises auf die Patenterteilung:
**23.11.83 Patentblatt 83/47**

(84) Benannte Vertragsstaaten:
**AT BE CH DE FR GB IT LU NL SE**

(56) Entgegenhaltungen:
**DE - A - 2 707 480**
**DE - C - 547 758**
**DE - C - 2 159 944**
**DE - U - 7 218 802**
**US - A - 3 338 037**

(73) Patentinhaber: **Ing. Alfred Schmidt GmbH, D-7822 St. Blasien (DE)**

(72) Erfinder: **Schmidt, Alfred, Ing.grad., Friedrichstrasse 17, D-7822 St. Blasien (DE)**

(74) Vertreter: **Siebert & Grättinger Patentanwälte, Almeidaweg 35, D-8130 Starnberg (DE)**

## Schneidwerk zum Beschneiden von Hecken, Büschen oder dergleichen

Die Erfindung betrifft ein Schneidwerk zum Beschneiden von Hecken, Büschen oder dergleichen und anschliessendem Zerkleinern des Schnittguts mit einem in einem Gehäuse angeordneten, um eine Achse horizontal drehbaren Schlagmesserschneidwerk zum Zerkleinern des Schnittguts, wobei das Gehäuse mit dem freien Ende eines an einem Tragfahrzeug angebrachten Auslegers verbunden und mit seiner Rückseite an einen Saugrüssel anschliessbar ist sowie eine Mähöffnung aufweist, durch welche das geschnittene Gut in das Gehäuseinnere gelangt.

Eine bekannte Erntemaschine (US-A-3 338 037) besitzt ein Schneidwerk, welches auch zum Beschneiden von Hecken und Buschwerk sowie zum Zerkleinern des Schnittguts geeignet ist. Zu diesem Zweck sind in einem Schwenkgehäuse zwei rotierende Schneidwerke hintereinander angeordnet, so dass deren Schneiden teilweise ineinandergreifen. Eine Ausführungsform der bekannten Erntemaschine sieht als Begrenzung der Mähöffnung eine austauschbare Platte vor, die mit feststehenden Messerplatten versehen ist; diese Platte dient dazu, das zu schneidende Gut in Richtung auf das Schneidwerk umzulenken, damit dieses einwandfrei vom Schneidwerk erfasst werden kann. Bei sperrigem Schneidgut, wie beispielsweise Hecken und Buschwerk besteht die Gefahr des Verstopfens der Mähöffnung und damit der Beschädigung der Maschine. Ein genaues Trimmen ist mit der bekannten Vorrichtung nicht gewährleistet, da das Schneidgut ausweichen kann, bevor es von den rotierenden Schneiden erfasst wird.

Ein bekanntes Mähwerk (DE-C-2 159 944), welches ebenfalls in der eingangs genannten Weise aufgebaut ist, ist für den Grasschnitt zum Zwecke der Instandhaltung von Strassenrändern, Banketten, Gräben und Böschungen vorgesehen. Ohne zusätzliche Massnahmen ist es jedoch zum Schneiden von Hecken und Büschen ungeeignet, da die an rotierenden Ketten befestigten Schneiden eines Schlagmesserschneidwerks einen sauberen Schnitt nur im Zusammenwirken mit einer festen Unterlage, die beim Grasschnitt durch den Boden gebildet wird, ergeben.

Es ist ferner bekannt (DE-A-2 707 480), ein Sauggrasmähwerk in Art eines Schlagmesserschneidwerks (Schlegelwalze) mit einem Randstreifenmähwerk, zweckmässig in Form eines Sichelmähers mit vertikaler Achse, zu kombinieren, wobei ersteres den Fahrbahnrand seitlich der Leitplanken mäht, während das Randstreifenmähwerk das Gras zwischen den Leitplankenpfosten mäht und den Grasschnitt in die Bahn des Sauggrasmähwerks wirft. Die beiden Mähwerke bewältigen hier unterschiedliche Mähaufgaben. Lediglich die Aufnahme des Mähguts soll über die gleiche Saugeinrichtung erfolgen.

Unterschiedlich zu den bekannten Mähwerken liegt der vorliegenden Erfindung die Aufgabe zugrunde, diese so umzugestalten, dass sie sich zum Schneiden von Hecken und Büschen eignen, wobei eine Aufnahme des Mähguts vom Boden entfallen soll.

Diese Aufgabe wird erfindungsgemäss an einem Mähwerk der eingangs genannten Art dadurch gelöst, dass am Gehäuse zusätzlich ein Messerbalkenschneidwerk vorgesehen ist, dessen Schneidkante parallel zur Drehachse des Schlagmesserschneidwerks und nahe der Ebene der Mähöffnung verläuft.

Bei einem derartigen Mähwerk werden die von den Messerbalken abgetrennten Zweige von dem unmittelbar dahinter arbeitenden Schlagmesserschneidwerk erfasst, weiter zerkleinert und direkt vor die im gemeinsamen Gehäuse vorhandene, an einen Saugrüssel angeschlossene Saugöffnung geschleudert. Das Messerbalkenschneidwerk erzeugt einen sauberen Schnitt; das Schlagmesserschneidwerk übernimmt die Aufgabe einer weiteren Zerkleinerung und des Transports des Schnittguts, so dass es, ohne auf den Boden zu fallen, abgesaugt werden kann.

Bei an die Saugöffnung des Gehäuses nicht angeschlossenem Saugrüssel wird das vom Schlagmesserschneidwerk erfasste Schnittgut durch die Saugöffnung ins Freie geschleudert. Eine besonders grosse Schnitthöhe lässt sich dadurch erreichen, dass das Messerbalkenschneidwerk den unteren Rand der Mähöffnung bildet.

Um auch grössere Holzstücke einwandfrei erfassen zu können, sieht eine besonders vorteilhafte Ausgestaltung vor, dass das Gehäuse in seiner in Horizontallage der Drehachse des Schlagmesserschneidwerks unteren Seite durch ein Bodenblech verschlossen ist. Dabei wird eine besonders gute Schneidwirkung dadurch erzielt, dass das Messerbalkenschneidwerk, in Arbeitsrichtung gesehen, vor dem Bodenblech angeordnet ist.

Um für den Transport der abgeschnittenen Zweige die grösste Beschleunigung des Messerbalkenschneidwerks auszunutzen, ist nach einer weiteren Ausgestaltung der Erfindung vorgesehen, dass das Messerbalkenschneidwerk mit geringem Abstand unterhalb des Bodenblechs angeordnet ist, wobei die Anordnung vor dem Bodenblech weiterhin vorausgesetzt wird.

Zum Erzielen einer sauberen Schnittfläche ist zweckmässig, dass die Schnittebene des Messerbalkenschneidwerks parallel zur Unterseite des Gehäuses bzw. zum Bodenblech verläuft.

Weitere Ausgestaltungen der Erfindung ergeben sich aus den Unteransprüchen 7 bis 11.

Im Rahmen der Erfindung kann ein für den Grasschnitt vorhandenes Schlagmesserschneidwerk mit Absaugeinrichtung ohne grossen Aufwand umgebaut werden, indem im unteren Bereich der Mähöffnung ein Messerbalkenschneidwerk, z.B. lösbar, angeflanscht wird, derart, dass die vom Messerbalkenschneidwerk geschnittenen Zweige unmittelbar dahinter von den Schlagmessern des Schlagmesserschneidwerks erfasst werden.

Im folgenden wird ein Ausführungsbeispiel der Erfindung anhand der Zeichnung erläutert. Es zeigt:

Fig. 1 eine schematische Seitenansicht des Mähwerks und

Fig. 2 eine Vorderansicht des Mähwerks mit Saugrüsselausleger.

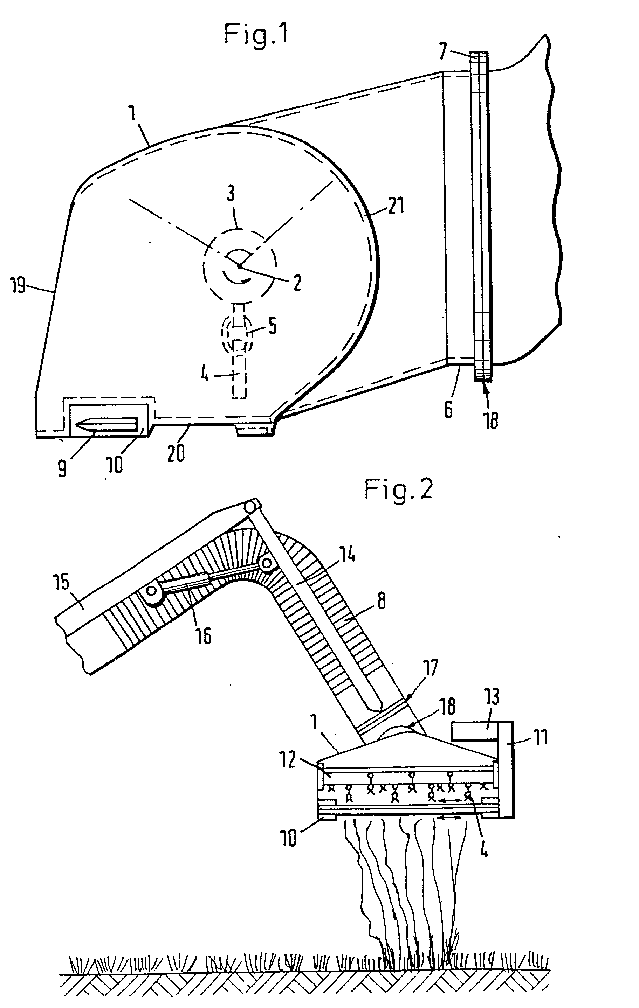

Gemäss Fig. 1 besteht das Mähwerk (Mähkopf) aus einem länglichen Gehäuse 1, parallel zu dessen Längsachse sich die Drehachse 2 der Welle 3 eines Schlagmesserschneidwerks erstreckt. Am Umfang der Welle 3 sind einzelne Schlagmesser 4 jeweils an wenigstens einem Kettenglied 5 befestigt. Beispielsweise sind die Schlagmesser in drei Reihen, jeweils mit einem Winkelabstand von 120° über den Umfang und die Länge der Schlagmesserwelle 3 verteilt angeordnet. An der Unterseite ist das Gehäuse 1 durch ein Bodenblech 20 verschlossen. Die der vorne vorhandenen Mähöffnung 19 des Gehäuses 1 gegenüberliegende rückwärtige Gehäusewand 5 ist entsprechend der Rotationsform des Schlagmesserschneidwerks gewölbt und befindet sich in unmittelbarer Nähe der peripheren Schneiden an den Schlagmessern 4. Die Rückwand 21 weicht zur Längsmitte des Gehäuses 1 hin zunehmend nach rückwärts aus und geht in einen Flanschteil 6 über, dessen stirnseitiger Flansch 7 einen Teil eines Drehkranzes darstellt, welcher das eigentliche Mähwerk mit einem Saugrüssel 8 verbindet.

Ein Messerbalkenschneidwerk 9 ist in seitlichen, mit dem Gehäuse verbundenen Halterungen 10 gelagert. Die beiden Messerbalken werden in der ihnen typischen Schwerbewegung über ein seitlich am Gehäuse 1 angebrachtes Getriebe 11 angetrieben. Das Getriebe weist eine weitere Zapfstelle für den Drehantrieb der Schlagmesserwelle 12 auf. An der Oberseite des Getriebes sitzt ein hydraulischer Motor 13, dessen Schlauchanschlüsse nicht dargestellt sind.

In Fig. 2 ist zusätzlich die Verteilung der an der Schlagmesserwelle 12 befestigten Schlagmesser erkennbar. Der Saugrüsselausleger besteht aus dem eigentlichen Saugrüssel 8 und einer Auslegermechanik, die vereinfacht in Form zweier gelenkig miteinander verbundener Lenker 14, 15 dargestellt ist. Die beiden Lenker sind mittels eines Hydraulikkolbens 16 gegeneinander verschwenkbar, so dass das am freien Ende des Saugrüsselauslegers beweglich befestigte Mähwerk in die jeweils gewünschte Schnitthöhe gebracht werden kann. Neben horizontalen Schnitten sind selbstverständlich auch schräge oder vertikale Schnitte möglich. Der entsprechenden Verstellung des Mähwerks dienen zwei Drehkränze, deren einer (17) in Fig. 2 dargestellt ist und deren anderer (18) in Fig. 2 teilweise stirnseitig und in Fig. 1 in einer Ansicht senkrecht zur Drehachse dargestellt ist.

An einem nicht dargestellten Arbeitsfahrzeug befindet sich eine Schwenklagerung für den in Fig. 2 links dargestellten Lenker 15 mit einer weiteren hydraulischen Verstelleinrichtung; der Saugrüssel 8 mündet in einen Grasfangbehälter, der ebenfalls auf dem Arbeitsfahrzeug aufgebaut ist, wobei das Schnittgut über ein zwischengeschaltetes Gebläse durch den Saugrüssel abgesaugt wird.

**Patentansprüche**

1. Schneidwerk zum Beschneiden von Hecken, Büschen oder dergleichen und anschliessendem Zerkleinern des Schnittguts mit einem in einem Gehäuse (1) angeordneten, um eine Achse horizontal drehbaren Schlagmesserschneidwerk (3, 4, 5) zum Zerkleinern des Schnittguts, wobei das Gehäuse (1) mit dem freien Ende eines an einem Tragfahrzeug angebrachten Auslegers verbunden und mit seiner Rückseite an einen Saugrüssel (8) anschliessbar ist sowie eine Mähöffnung (19) aufweist, durch welche das geschnittene Gut in das Gehäuseinnere gelangt, dadurch gekennzeichnet, dass am Gehäuse (1) zusätzlich ein Messerbalkenschneidwerk (9) vorgesehen ist, dessen Schneidkante parallel zur Drehachse des Schlagmesserschneidwerks (3, 4, 5) und nahe der Ebene der Mähöffnung (19) verläuft.

2. Schneidwerk nach Anspruch 1, dadurch gekennzeichnet, dass das Messerbalkenschneidwerk (9) den unteren Rand der Mähöffnung (19) bildet.

3. Schneidwerk nach Anspruch 1 oder 2, dadurch gekennzeichnet, dass das Gehäuse an seiner in Horizontallage der Drehachse (2) des Schlagmesserschneidwerks (3, 4, 5) unteren Seite durch ein Bodenblech (20) verschlossen ist.

4. Schneidwerk nach einem der Ansprüche 1 bis 3, dadurch gekennzeichnet, dass das Messerbalkenschneidwerk (9), in Arbeitsrichtung gesehen, vor dem Bodenblech (20) angeordnet ist.

5. Schneidwerk nach einem der Ansprüche 1 bis 4, dadurch gekennzeichnet, dass das Messerbalkenschneidwerk (9) mit geringem Abstand unterhalb des Bodenblechs (20) angeordnet ist.

6. Schneidwerk nach einem der Ansprüche 1 bis 4, dadurch gekennzeichnet, dass die Schnittebene des Messerbalkenschneidwerks (9) parallel zur Unterseite des Gehäuses bzw. zum Bodenblech (20) verläuft.

7. Schneidwerk nach Anspruch 1, dadurch gekennzeichnet, dass die beiden Schneidwerke mittels seitlich am Gehäuse angeordneter Antriebseinrichtungen (11, 13) angetrieben sind.

8. Schneidwerk nach Anspruch 7, dadurch gekennzeichnet, dass die Antriebseinrichtungen (11, 13) auf derselben Seite des Gehäuses angeordnet sind.

9. Schneidwerk nach einem der Ansprüche 1 bis 6, dadurch gekennzeichnet, dass das Messerbalkenschneidwerk in unmittelbarer Nachbarschaft der äusseren Hüllfläche des rotierenden Schlagmesserschneidwerks angeordnet ist.

10. Schneidwerk nach einem der Ansprüche 1 bis 9, dadurch gekennzeichnet, dass das Messerbalkenschneidwerk (9) an der Unterseite eines Gehäuses eines zum Schneiden von Gras gebräuchlichen Schlagmesserschneidwerks mit Absaugeinrichtung angeflanscht ist.

11. Schneidwerk nach Anspruch 10, dadurch gekennzeichnet, dass die Schnittebene des Messerbalkenschneidwerks etwa in Höhe der beim Einsatz des Schlagmesserschneidwerks für den Grasschnitt vorhandenen bodenseitigen Stützflächen liegt.

**Claims**

1. Apparatus for trimming hedges, bushes and the like and for subsequently chopping up the cut material by a fly-cutter (3, 4, 5) rotatably mounted within a housing (1) along a horizontal axis to chop the cut material into small pieces whereby said housing (1) is mounted at the free end of a jib-boom which is connected to a supporting vehicle, said housing being connected with its rear wall to a hose (8) and having an opening (19) through which the cut material is passed into said housing, characterized in that said housing (1) comprising further a bar cutter (9) the cutting edge of which extending parallel to the axis of rotation of the fly-cutter (3, 4, 5) and close to the plane of said opening (19).

2. Apparatus according to claim 1, characterized in that said bar cutter is forming the lower edge of said opening (19).

3. Apparatus according to claims 1 or 2, characterized in that said housing (19), when the rotating shaft (2) of said fly-cutter (3, 4, 5) is in its horizontal position, having a lower side which is closed by a bottom plate (20).

4. Apparatus according to any of the claims 1 to 3, characterized in that said bar cutter (9), with reference to its operating direction, being arranged in front of said bottom plate (20).

5. Apparatus according to any of the claims 1 to 4, characterized in that said bar cutter (9) is located at a small distance below said bottom plate (20).

6. Apparatus according to any of the claims 1 to 4, characterized in that the cutting plane of said bar cutter (9) is parallel to the lower side of said housing or of said bottom plate (20) respectively.

7. Apparatus according to claim 1, characterized in that both cutting devices are driven by drive means (11, 13) mounted laterally to said housing.

8. Apparatus according to claim 7, characterized in that said drive means (11, 13) are located on one side of said housing.

9. Apparatus according to any of the claims 1 to 6, characterized in that said bar cutter being located in close vicinity to the envelope area of the rotating fly-cutter.

10. Apparatus according to any of the claims 1 to 9, characterized in that said bar cutter (9) being mounted on the lower side of a common fly-cutter unit for mowing grass, which comprises a suction system.

11. Apparatus according to claim 10, characterized in that the cutting plane of the bar cutter being located in the height of support means at the bottom of a fly-cutter, when being used for mowing grass.

## Revendications

1. Cisaille mécanique pour la taille de haies, buissons, ou analogues, et pour un hachage consécutif en menus morceaux des produits coupés, avec un mécanisme de coupe à couteaux à percussion (3, 4, 5) en rotation autour d'un axe horizontal, pour le hachage des produits coupés, le carter (1) étant relié à l'extrémité libre d'un timon monté sur un véhicule tracteur et pouvant être raccordé avec sa face arrière à une trompe d'aspiration (8), et comportant également une ouverture de fauchage (19) à travers laquelle les produits coupés parviennent dans l'intérieur du carter, cisaille mécanique caractérisée en ce que, sur le carter (1) est prévu, en supplément, un mécanisme de coupe à barres porte-couteaux (9), dont l'arête de coupe s'étend parallèlement à l'axe de rotation du mécanisme de coupe à couteaux de percussion (3, 4, 5) et au voisinage du plan de l'ouverture de fauchage (19).

2. Cisaille mécanique suivant la revendication 1, caractérisée en ce que le mécanisme de coupe à barres porte-couteaux (9) forme lui-même le bord inférieur de l'ouverture de fauchage (19).

3. Cisaille mécanique suivant l'une des revendications 1 ou 2, caractérisée en ce que le carter est obturé, sur son côté inférieur dans la position horizontale de l'axe de rotation (2) du mécanisme de coupe à couteaux de percussion (3, 4, 5), au moyen d'une tôle de fond (20).

4. Cisaille mécanique suivant l'une des revendications 1 à 3, caractérisée en ce que le mécanisme de coupe à barres porte-couteaux (9) est disposé, en direction du travail, en avant de la tôle de fond (20).

5. Cisaille mécanique suivant l'une des revendications 1 à 4, caractérisée en ce que le mécanisme à barres porte-couteaux (9) est disposé, avec une faible distance d'espacement, au-dessous de la tôle de fond (20).

6. Cisaille mécanique suivant l'une des revendications 1 à 4, caractérisée en ce que le plan de coupe du mécanisme à barres porte-couteaux (9) s'étend parallèlement à la face inférieure du carter, ainsi que parallèlement à la tôle de fond (20).

7. Cisaille mécanique suivant la revendication 1, caractérisée en ce que les deux mécanismes de coupe sont entraînés au moyen d'installations d'entraînement (11, 13) disposées latéralement sur le carter.

8. Cisaille mécanique suivant la revendication 7, caractérisée en ce que les installations d'entraînement (11, 13) sont disposées sur le même côté du carter.

9. Cisaille mécanique suivant l'une des revendications 1 à 6, caractérisée en ce que le mécanisme de coupe à barres porte-couteaux est disposé à proximité immédiate de la surface enveloppe du mécanisme de coupe à couteaux de percussion.

10. Cisaille mécanique suivant l'une des revendications 1 à 9, caractérisée en ce que le mécanisme de coupe à barres porte-couteaux (9) est monté par bride sur la face inférieure du carter d'un mécanisme de coupe à couteaux à percussion utilisé normalement pour couper l'herbe et pourvu d'une installation d'aspiration.

11. Cisaille mécanique suivant la revendication 10, caractérisée en ce que le plan de coupe du mécanisme de coupe à barres porte-couteaux est situé au même niveau que les surfaces d'appui au sol, qui sont présentes lors de la mise en oeuvre du mécanisme à couteaux de percussion pour couper l'herbe.

## Fig.1

## Fig.2